# DEMANDE DE BREVET EUROPEEN

(11) **EP 2 260 741 A1**
(43) Date de publication de la demande: **15.12.2010**
(21) Numéro de dépôt: 10164887.1
(22) Date de dépôt: 03.06.2010
(51) Int. Cl.: A45F 5/02, A47B 49/00, A47G 23/08

(54) **Appareil ménager de table avec plateau rotatif de desserte**

(30) Priorité: 09.06.2009 FR 0953815
(71) Demandeur: SEB SA, 69130 Ecully (FR)
(72) Inventeur: Bouvier, Pierre, 38110, Saint Victor de Cessieu (FR); Besson, Jean-Christophe, 74600, Seynod (FR)
(74) Mandataire: Novagraaf Technologies

(57) **Abrégé**

L'invention concerne un appareil ménager (1) de table comprenant une base (2) centrale et un plateau (3) annulaire de desserte d'aliments, le plateau (3) ceinturant la base (2) et étant monté en rotation autour de cette dernière.

Selon l'invention, le contact entre la base (2) et le plateau (3) n'est formé que par des contacts discrets.

## Description

La présente invention concerne un appareil ménager de table avec un plateau rotatif de desserte, par exemple un appareil électroménager possédant une base centrale munie d'un dispositif de chauffe autour de laquelle un plateau annulaire est monté en rotation. La base centrale pouvant être un appareil de réchauffage d'aliment (appareils pour apéritifs dinatoires), un appareil à raclette, à fondue, ou tout autre appareil pour repas conviviaux.

On connaît de tels appareils du type comprenant une base centrale et un plateau annulaire de desserte d'aliments ceinturant la base et monté en rotation autour de cette dernière. L'inconvénient majeur de ces appareils est la présence de frottements importants dus au contact du plateau avec la base, frottements gênant la rotation du plateau.

La solution usuelle a été d'introduire des systèmes plus ou moins perfectionnés, tels que des roulements à billes. Cependant, cette solution présente l'inconvénient de rendre l'appareil plus complexe et donc plus cher.

La présente invention vise à réaliser un appareil ménager de table simple, dans lequel la rotation du plateau nécessite peu de force.

Selon l'invention, dans l'appareil du type précité, le contact entre la base et le plateau n'est formé que par des contacts discrets.

Ainsi, en limitant la surface de contact entre le plateau et la base, les frottements sont considérablement diminués, sans que l'appareil comprenne des éléments constitutifs supplémentaires (la base et le plateau sont en contacts l'un avec l'autre, contrairement aux appareils ayant de tels éléments constitutifs supplémentaires tels que des systèmes de roulement).

D'autres particularités et avantages de la présente invention apparaîtront dans la description de deux modes de réalisation donnés à titre d'exemples non limitatifs et illustrés par les dessins mis en annexe dans lesquels :

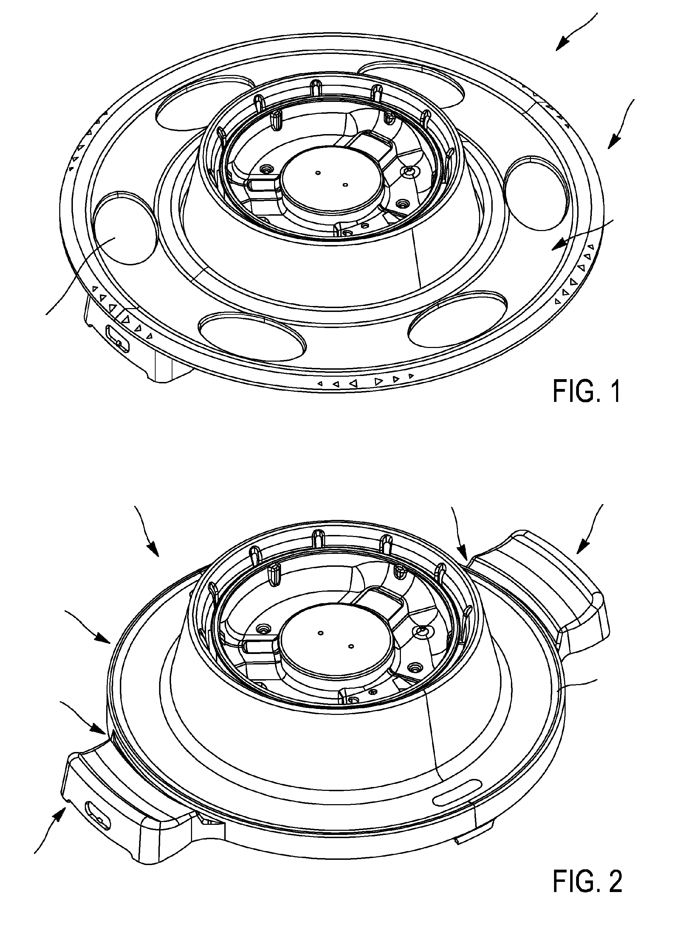

- La figure 1 est une vue en perspective de trois quart de dessus d'un appareil pour apéritif dinatoire conforme à un premier mode de réalisation de la présente invention, sans représentation de la surface centrale de réchauffage des aliments,
- La figure 2 est une vue en perspective de trois quart de dessus de la base de la figure 1, sans la surface centrale de réchauffage,
- La figure 3 est une vue partielle en coupe axiale de l'appareil illustré à la figure 1,
- La figure 4 est une vue partielle de la face inférieure du plateau illustré à la figure 1,
- La figure 5 est une vue similaire à la figure 4 d'un appareil conforme à un second mode de réalisation de la présente invention, et
- La figure 6 similaire à la figure 5 du plateau du second mode de réalisation.

La présente invention concerne un appareil ménager 1 adapté à être disposé sur une table de prise de repas, particulièrement adapté aux repas conviviaux. En l'occurrence, l'appareil ménager 1 est un appareil électroménager et, plus précisément, un appareil pour apéritifs dinatoire. L'appareil comprend une base centrale 2 et un plateau rotatif 3 ceinturant la base 2 et monté en rotation autour de cette dernière.

La base centrale 2 comprend une surface centrale de réception d'aliments (en l'occurrence un bol) ainsi que dans les présents modes de réalisation, un dispositif électrique de chauffe adapté à chauffer la surface centrale de réception et disposé sous cette dernière.

La base centrale 2 comprend également une surface annulaire de réception 4 ceinturant la surface centrale de réception, et adaptée à recevoir le plateau 3. Dans les présents exemples, la surface annulaire de réception 4 se situe verticalement à un niveau plus bas que la surface centrale de réception d'aliments. La surface centrale de réception d'aliments est disposée au sommet de la base 2 qui forme une colonne, tandis que la surface annulaire de réception 4 est disposée à sa partie inférieur. La base centrale 2 comprend également deux poignées 5 qui sont diamétralement opposées l'une par rapport à l'autre et qui forment deux saillies s'étendant radialement vers l'extérieur de la surface annulaire de réception 4. Ici, la base 2 est réalisée en un matériau thermoplastique, tel que du polypropylène ou du polybutylène téréphthalate.

Le plateau rotatif 3 comprend une zone de desserte 6 qui forme l'essentiel de ce dernier. Cette zone de desserte 6, ici essentiellement horizontale, est adaptée à recevoir différents aliments (directement ou indirectement, via des petits récipients). Dans les présents modes de réalisation, la zone de desserte comprend des empreintes 7 qui forment des zones spécialement dédiées à la réception d'aliments. Ces empreintes 7 (ici, au nombre de six) sont formés par des cuvettes (ici, identiques) dont la section correspond à la section de fond de petits bols.

Le plateau rotatif 3 comprend également une surface d'appui 8 qui est adaptée à reposer sur la surface annulaire de réception 4 de la base centrale 2.

Conformément à l'invention, le contact entre la base 2 et le plateau 3 n'est formé que par des contacts discrets. Ces contacts discrets sont formés par la mise en contact de plusieurs reliefs 9 espacés radialement les uns des autres avec au moins un (ici, un) relief annulaire 10.

Ces reliefs 9, 10 sont conformés pour permettre une rotation agréable et aisée du plateau 3 quand celui-ci supporte jusqu'à environ 2 kg (surtout quand la masse est répartie sur le plateau 3), ce qui correspond, dans le présent exemple, aux six petits bols disposés sur les empreintes 7 et contenant chacun environ 300 g d'aliment.

Dans les présents modes de réalisation, le relief annulaire 10 est réalisé à la face supérieure de la surface annulaire de réception 4, et les reliefs 9 espacés radialement les uns des autres sont réalisés à la face inférieure de la surface d'appui 8.

Dans les présents modes de réalisation, le relief annulaire 10 est formé par une nervure saillante 10 qui forme la périphérie de la base centrale 2.

Dans le premier mode de réalisation, les reliefs 9 espacés radialement les uns des autres sont formés par des nervures radiales 9 (de préférence entre dix et quinze afin d'avoir une bonne répartition du poids - ici, douze nervures). Dans cet exemple, le plateau 3 est réalisé en un matériau thermoplastique, de préférence différent de celui utilisé pour la réalisation de la base 2, afin de réduire les frottements entre la surface d'appui 8 et la surface annulaire de réception 4. Le matériau utilisé pour la fabrication du plateau 3 peut être, par exemple une résine styrène-acrylonitrile. Dans le présent mode de réalisation, vu la nature thermoplastique du plateau 3 et de la base 2, les nervures radiales 9 ont de préférence une largeur comprise entre 0,6 et 1 mm (ici, de 0,8 mm) afin d'une part, de limiter les forces de frottement qui seraient engendrées par une surface de contact trop importante, et, d'autre part, d'éviter une usure prématurée qui pourrait intervenir avec des nervures trop fines pouvant alors se comporter comme des lames de couteaux.

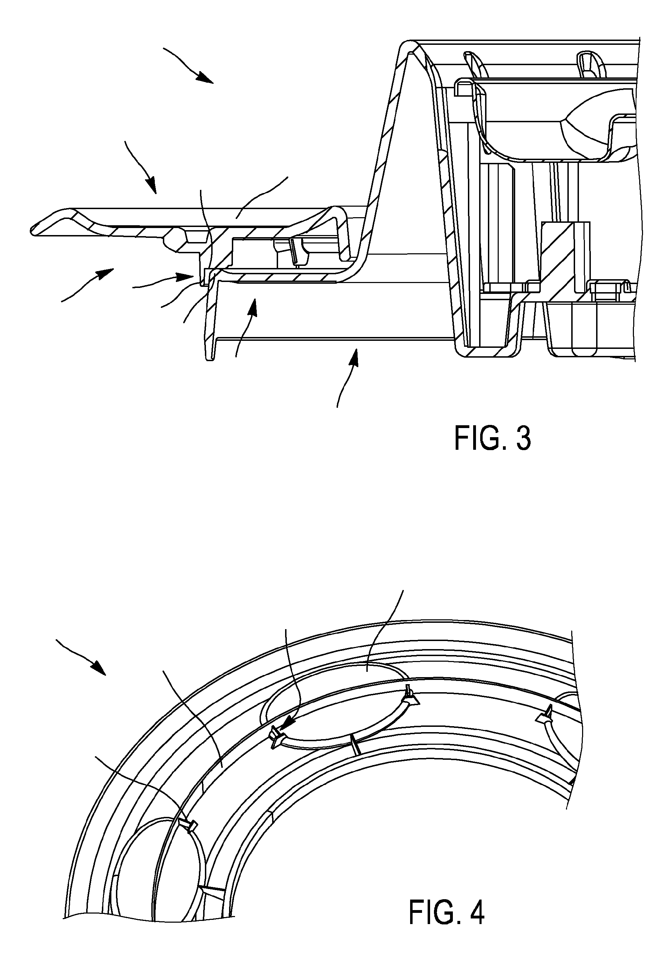

Par ailleurs, dans le premier exemple, afin de le renforcer, le plateau 3 comprend, à la face inférieure de la surface d'appui 8, une nervure annulaire 11 de renfort. Cette nervure 11 est en contact avec les différentes nervures radiales 9 et, dans le présent exemple, elle court le long du fond des empreintes 7. La nervure de renfort 11 ceinture, à distance, la base centrale 2 afin de ne pas générer de frottements inutiles, comme illustré à la figure 3. Pour la même raison, la base 2 comprend deux rainures 12 au niveau de la jonction des poignées 5 afin d'éviter des contacts à ces niveaux.

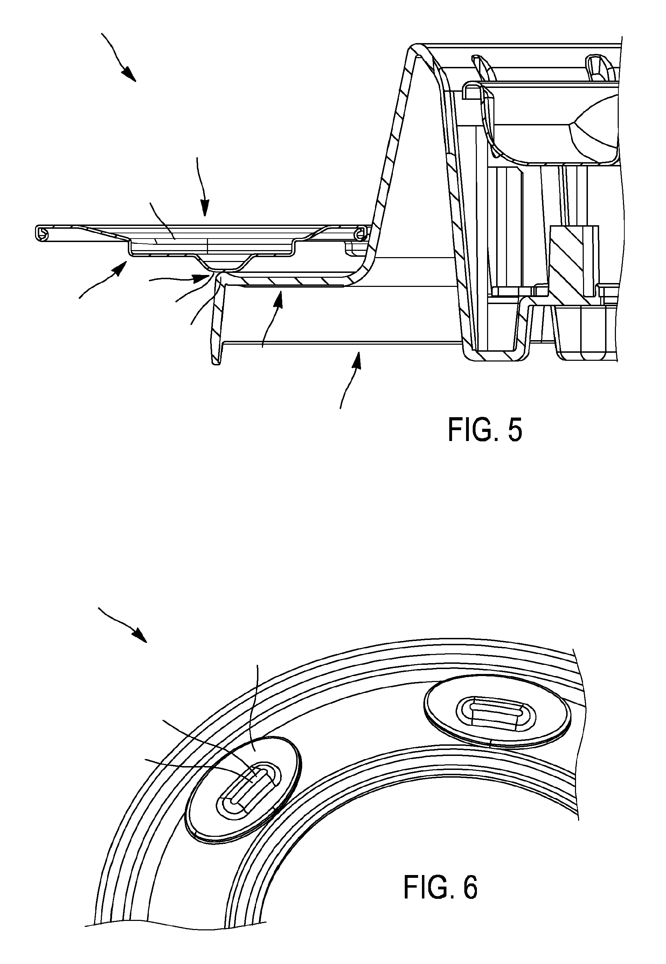

Dans le second mode de réalisation, les reliefs 9 espacés radialement les uns des autres sont formés par des bossages 9 (ici, six). Dans cet exemple, le plateau 3 est réalisé en acier inoxydable, ce qui fait que le plateau ne nécessite pas de structure de renfort. Les bossages 9 sont disposés au fond des empreintes 7, comme illustré aux figures 5 et 6.

Ainsi, en fonction, un utilisateur peut facilement faire tourner le plateau 3 autour de la base 2 en entraînant manuellement la zone de desserte 6. De ce fait, l'utilisateur peut voir défiler devant lui les différents aliments disposés sur cette zone 6. Il peut également faire réchauffer les aliments se trouvant sur la zone de desserte en les déposant sur la surface centrale de réception d'aliments ou bien prendre des aliments chauds préalablement disposés sur cette surface centrale.

Bien évidemment, la présente invention n'est pas limitée aux deux modes de réalisation précités.

Ainsi, les reliefs espacés radialement les uns des autres pourraient être formés par des billes venant en appui sur une surface plane portée par la surface plane de réception. Ces billes, par exemple en verre ou en acier inoxydable, peuvent être surmoulées.

L'appareil pourrait également être un crêpier, un appareil à fondue, un appareil à raclette, ou tout autre appareil adapté pour des repas conviviaux.

## Revendications

1. Appareil ménager (1) de table comprenant une base (2) centrale et un plateau (3) annulaire de desserte d'aliments ceinturant la base et monté en rotation autour de cette dernière, **caractérisé en ce que** le contact entre la base (2) et le plateau (3) n'est formé que par des contacts discrets.

2. Appareil ménager (1) selon la revendication 1, **caractérisé en ce que** la base (2) comprend une surface annulaire de réception (4) sur laquelle repose une surface d'appui (8) portée par le plateau (3).

3. Appareil ménager (1) selon l'une des revendications 1 ou 2, **caractérisé en ce que** les contacts discrets entre la base (2) et le plateau (3) sont formés par la mise en contact de plusieurs reliefs (9) espacés radialement les uns des autres avec au moins un relief annulaire (10).

4. Appareil ménager (1) selon la revendication 3 dépendante de la revendication 2, **caractérisé en ce que** le relief annulaire (10) est réalisé à la face supérieure de la surface annulaire de réception (4), et **en ce que** les reliefs (9) espacés radialement les uns des autres sont réalisés à la face inférieure de la surface d'appui (8).

5. Appareil ménager (1) selon l'une des revendications 3 ou 4 dépendantes de la revendication 2, **caractérisé en ce que** le relief annulaire (10) est formé par une nervure saillante (10).

6. Appareil ménager (1) selon l'une des revendications 3 à 5 dépendantes de la revendication 2, **caractérisé en ce que** les reliefs (9) espacés radialement les uns des autres sont formés par des nervures radiales (9).

7. Appareil ménager (1) selon l'une des revendications 3 à 5 dépendantes de la revendication 2, **caractérisé en ce que** les reliefs (9) espacés radialement les uns des autres sont formés par des bossages (9).

8. Appareil ménager (1) selon l'une des revendications 3 à 5 dépendantes de la revendication 2, **caractérisé en ce que** les reliefs (9) espacés radialement les uns des autres sont formés par des billes.

9. Appareil ménager (1) selon l'une des revendications 1 à 8, **caractérisé en ce que** la base (2) comprend une surface centrale de réception d'aliment.

10. Appareil ménager (1) selon la revendication 9, **caractérisé en ce que** la base (2) comprend un dispositif électrique de chauffe adapté à chauffer la surface centrale de réception.
